# EUROPÄISCHE PATENTSCHRIFT

(11) **EP 2 191 159 B1**
(45) Veröffentlichungstag und Bekanntmachung des Hinweises auf die Patenterteilung: **27.02.2013**
(21) Anmeldenummer: 08801901.3
(22) Anmeldetag: 08.09.2008
(51) Int. Cl.: F16D 48/02, F16H 61/00, B60K 6/387

(54) **ANTRIEBSANORDNUNG MIT EINEM VERBRENNUNGSMOTOR UND EINER ELEKTROMASCHINE**
DRIVING ARRANGEMENT WITH AN INTERNAL COMBUSTION ENGINE AND AN ELECTRIC MACHINE
SYSTÈME D'ENTRAÎNEMENT COMPRENANT UN MOTEUR À COMBUSTION INTERNE ET UN MOTEUR ÉLECTRIQUE

(30) Priorität: 11.09.2007 DE 102007043016
(43) Veröffentlichungstag der Anmeldung: 02.06.2010
(73) Patentinhaber: Volkswagen Aktiengesellschaft, 38440 Wolfsburg (DE)
(72) Erfinder: WARNECKE, Raimar, 38179 Schwülper (DE); KRUSE, Georg, 38518 Gifhorn (DE)
(86) Internationale Anmeldenummer: PCT/EP2008/007319
(87) Internationale Veröffentlichungsnummer: WO 2009/033621

(56) Entgegenhaltungen:
- EP-A- 1 420 186
- WO-A-2005/123432
- WO-A-2007/101421
- DE-A1-102005 015 911

## Beschreibung

Die Erfindung betrifft eine Antriebsanordnung mit den Merkmalen nach dem Oberbegriff des Anspruchs 1.

Hybride Antriebssysteme mit einem Parallel-Hybridantrieb mit einer seriellen Anordnung eines Verbrennungsmotors, einer als Motor-Starter-Generator ausgebildeten Elektromaschine und einem abtriebsseitig mit einem Achsantrieb verbundenen Fahrgetriebe, bei dem zwischen dem Verbrennungsmotor und der Elektromaschine eine erste Trennkupplung (K0-Kupplung) und zwischen der Elektromaschine und dem Fahrgetriebe eine zweite Trennkupplung (K1-Kupplung) angeordnet sind, sind bekannt, beispielsweise aus der DE 10 2004 023 673 A1. Es handelt sich hierbei um so genannte Full-Hybride, d.h. sowohl der Verbrennungsmotor als auch die Elektromaschine können eigenständig den Vortrieb leisten.

Aus der WO 2005/123432 A ist eine Antriebsanordnung mit einem Verbrennungsmotor, einem Getriebe mit einer ersten Kupplung sowie dazwischen angeordnet eine Elektromaschine und eine weiter Kupplung bekannt, wobei die K0-Kupplung ein An- und Abkuppeln der Elektromaschine erlaubt und das Ein- und Ausrücken der K0-Kupplung mittels einer Hydraulischen Betätigungsvorrichtung erfolgt. Das Getriebe weist zur Betätigung der Schaltvorgänge ein Hydrauliksystem auf, wobei das Stellmittel, das auf die Betätigungseinrichtung der K0-Kupplung wirkt ein Hydraulikmedium aus dem Getriebehydraulikkreis ist. Dieser Hydraulikkreis ist ein offenes System, bei dem alle Elemente auf der druckfreien Seite mit einem gemeinsamen Hydrauliksumpf verbunden werden.

Aus der DE 10 2005 015 911 A1 ist ein Hydraulikkreislauf zur hydraulischen Steuerung eines Doppelkupplungsgetriebes bekannt. Der Hydraulikkreislauf weist dabei ein Steuersystem und ein Versorgungssystem zur Versorgung des Steuersystems mit einem Fluid - hier einem Hydrauliköl - auf. Das Hydrauliköl wird aus dem Reservoir bzw. Tank mit der Fluidpumpe gepumpt, wobei das Hydrauliköl beim Pumpen mit dem der Fluidpumpe vorgeschalteten Saugfilter und einer weiteren, der Fluidpumpe nachgeschalteten, zweiten Filtervorrichtung gefiltert wird. Hiernach wird das Hydrauliköl einem Hauptdruckventil zugeführt, wobei von dem Hauptdruckventil mehrere Hydraulik-Teilkreisläufe mit Aktuatoren abzweigen. Die Hydraulik-Teilkreisläufe bilden dabei das Steuersystem zur Steuerung des Doppelkupplungsgetriebes. Die Aktuatoren werden dabei zum Schalten der Gangstufen und zum Betätigen von zwei Reibkupplungen des Doppelkupplungsgetriebes verwendet. Der Zulauf des Hydrauliköls zu den Hydraulik-Teilkreisläufen erfolgt dabei priorisiert, d. h. das Hauptdruckventil weist eine entsprechende Rangfolgenschaltung zu den einzelnen Hydraulik-Teilkreisläufen auf. Die Fluidpumpe wird hier nur aktiviert, wenn das Steuersystem bzw. die Hydraulik-Teilkreisläufe mit Hydrauliköl versorgt werden.

Aus der EP 1 420 186 A 2 ist bekannt, innerhalb einer hydraulischen Anordnung die Bereitstellung von Hydraulikflüssigkeit unter hohem Druck zur Betätigung von Aktuatoren und die Förderung von Hydraulikflüssigkeit als Kühlmittel für eine Kupplung bei geringeren Drucken, jedoch mit höheren Durchlaufraten, miteinander zu verbinden. Dabei soll insbesondere auf der Niederdruckseite, auf der die Hydraulikflüssigkeit vor dem Zuführen zu den zu kühlenden Teilen angesaugt wird, das wiederholte Durchlaufen von Reinigungsfiltern verhindert werden, das den Durchsatz verringert.

Hierbei ist zum Betätigen der K0-Kupplung bzw. zum Ein- und Ausrücken der Kupplungsscheibe der K0-Kupplung ein Zentralausrücker vorgesehen, der so genannte CSC (Central Slave Cylinder), der hydraulisch betätigt wird.

Aufgabe ist es nunmehr, ein hydraulisches Betätigungssystem für die K0-Kupplung bzw. den CSC bereitzustellen, das eine kompakte Bauweise, ein geringes Gewicht, hohe Wirtschaftlichkeit sowie günstige Ansteuerungsmöglichkeiten gewährleistet.

Diese Aufgabe wird mit den Merkmalen des Anspruchs 1 gelöst.

Vorteilhafte Ausführungsformen finden sich in den Unteransprüchen.

Der Erfindung liegt der Gedanke zugrunde, für die Betätigung der K0-Kupplung bzw. des Zentralausrückers der K0-Kupplung den Systemdruck der Getriebehydraulik des benachbart angeordneten Getriebes zu nutzen. Das Hydraulikmedium des Getriebes wird auch für die hydraulische Betätigung des Zentralausrückers verwendet und zwar mittelbar als Stellmittel, welches auf die hydraulische Betätigungsvorrichtung bzw. den Stellzylinder des Zentralausrückers wirkt. Hierbei weist das Getriebe eine Schnittstelle auf, so dass der Systemdruck der Mechatronik zur hydraulischen Kraftverschiebung der Hydrauliksäule im Geberzylinder für den Zentralausrücker verwendet werden kann.

Die Erfindung wird anhand der Fig. näher beschrieben. Hierbei zeigen
- Fig. 1: eine Übersicht über eine Antriebsanordnung eines kompakten Hybridantriebs mit einem Ventilblock am Getriebegehäuse;
- Fig. 2: einen Hydraulikplan für den Zentralausrücker einer K0-Kupplung nach der Erfindung;
- Fig. 3: eine Darstellung der montierten Antriebsanordnung mit Ventilblock und einer K0-Leitung;
- Fig. 4: eine Darstellung der Ankopplung des Ventilblocks an das Getriebegehäuse;
- Fig. 5: eine Darstellung des Ventilblocks mit K0-Leitung nebst Zentralausrücker (CSC);
- Fig. 6: eine Darstellung der montierten K0-Leitung.

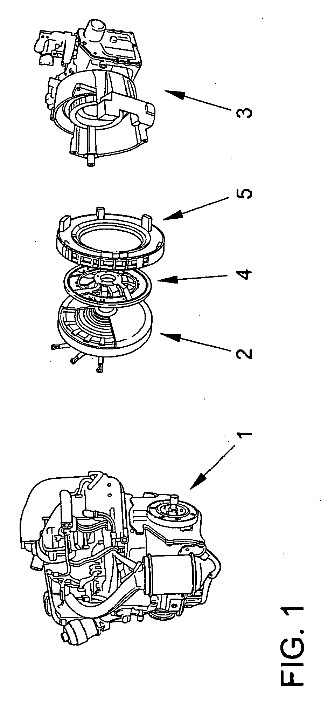

Fig. 1 zeigt einen Überblick der Komponenten eines Parallel-Hybridantriebs mit einer seriellen Anordnung eines Verbrennungsmotors 1, einer als Motor-Starter-Generator ausgebildeten Elektromaschine 2 und einem abtriebsseitig mit einem Achsantrieb verbundenen Getriebe 3. Die Elektromaschine 2 ist zum Getriebe 3 hin mit einer Trennkupplung (K0-Kupplung) 4 und einem Torsionsschwingungsdämpfer 5 verbunden und bildet somit ein hochintegriertes Impulsstartmodul. Danach schließt sich das Getriebe 3, hier ein Doppelkupplungsgetriebe mit zwei Trockenkupplungen und 7 Gängen, sowie eine zweite Trennkupplung an.

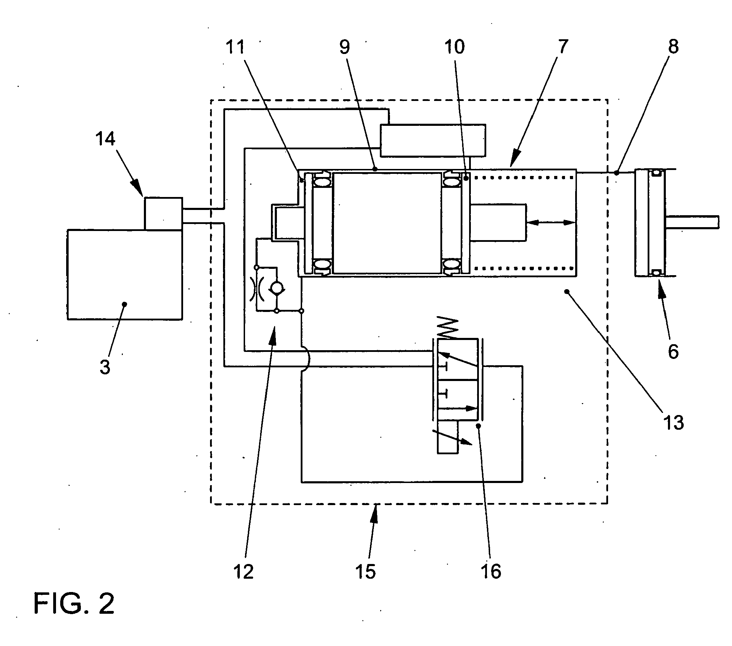

Fig. 2 zeigt den Hydraulikplan für den Zentralausrücker 6 der K0-Kupplung 4, d.h. den CSC. Der Zentralausrücker 6 bzw. CSC wird mittels einer hydraulischen Betätigungsvorrichtung 7 bewegt, wobei CSC und die hydraulische Betätigungsvorrichtung 7 über eine Leitung 8 (K0-Leitung) in Wirkverbindung stehen. Die hydraulische Betätigungsvorrichtung 7 umfasst einen in einem Zylinder 9 bewegbaren Kolben 10, wobei das auf den Kolben 10 wirkende Stellmittel ebenfalls ein Hydraulikmedium 11 ist. Die hydraulische Betätigungsvorrichtung 7 weist somit eine Hydraulik-Primär- (12) und Sekundärseite (13) auf. Das Hydraulikmedium 11 stammt aus dem Hydraulikkreis des Getriebes, nämlich aus der Mechatronikeinheit 14. Hieraus wird Hydraulikmedium 11 in den Ventilblock 15, der das Steuerventil 16 und die hydraulische Betätigungsvorrichtung 7 umgibt, eingeführt.

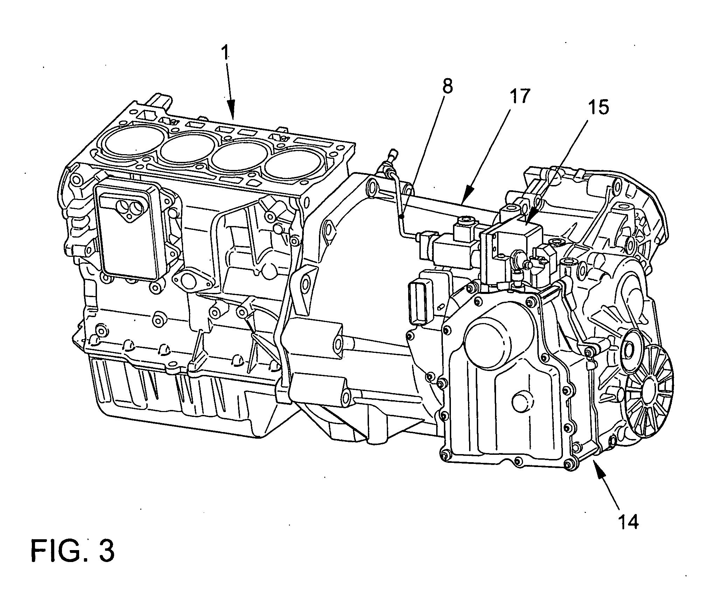

Eine Gesamtübersicht über die zusammengebaute Antriebsanordnung zeigt Fig. 3. Es werden zur Verdeutlichung der Bauteile die gleichen Bezugsziffern wie in Fig. 1 verwendet. Der Ventilblock 15 befindet sich oberhalb der Mechatronikeinheit 14 des Getriebes 3; er wird unmittelbar oberhalb des Hydrauliksystems der Mechatronik angeflanscht. Das Hydraulikmedium der Sekundärseite wird über die K0-Leitung 8 entlang des Kupplungsgehäuses 17 an eine Zuführstelle am Kurbelwellengehäuse 18 des Motors geführt. Das Kupplungsgehäuse 17 des Getriebes 3 ist verlängert, um das hochintegrierte Impulsstartmodul sicher aufzunehmen. Es ist ebenfalls denkbar, dass der Ventilblock an einer anderen Stelle am Getriebe angeordnet ist, um auf bauraumspezifische Besonderheiten einzugehen. Hierbei können auch Kanäle, die im Getriebegehäuse eingebracht sind, Hydraulikmittel fördern.

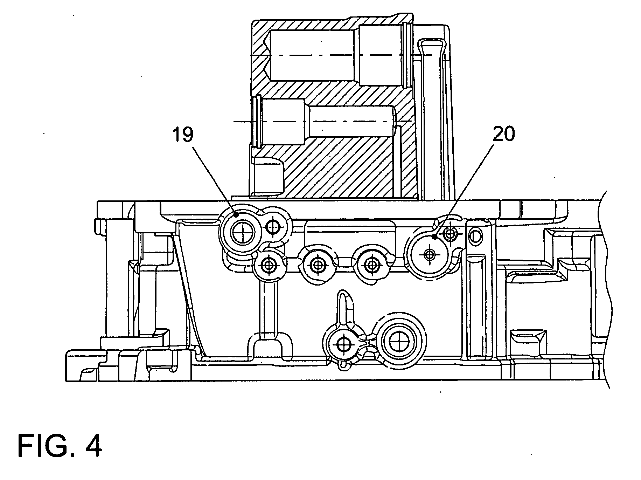

Die Ankoppelpunkte des Ventilblocks 15 an dem Getriebegehäuse zeigt Fig. 4. Mit 19 ist die Tankleitung, mit 20 ist Druckleitung zum Ventilblock bezeichnet.

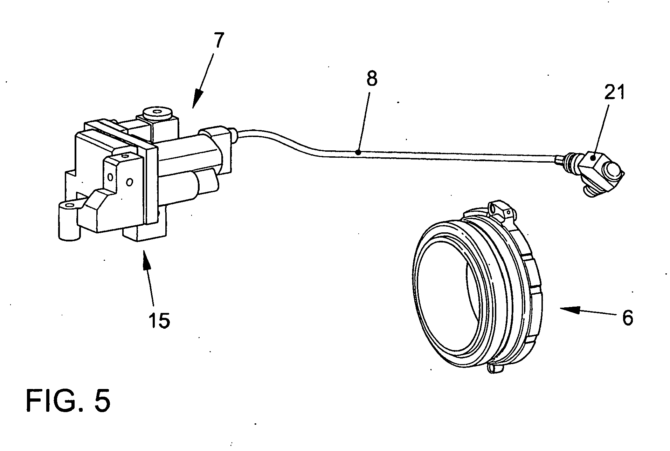

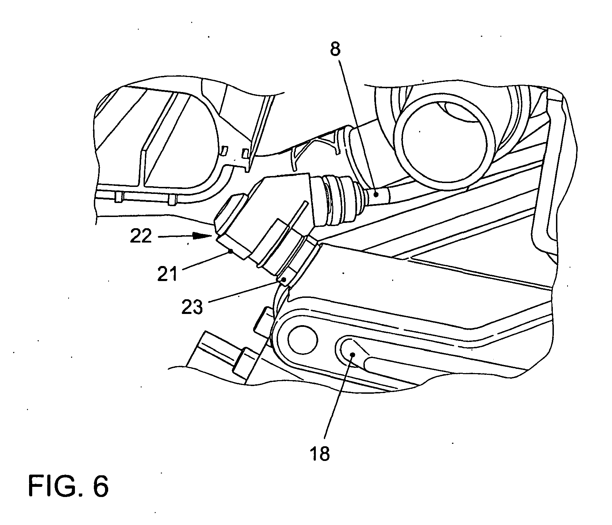

Detailansichten des Ventilblocks 15, der K0-Leitung 8 und des Zentralausrückers (CSC) 6 zeigen die Fig. 5 und 6. Das von dem Ventilblock 15 wegweisende Ende der K0-Leitung 8 weist einen Einschraubadapter 21 auf. Dieser wird an das Kurbelwellengehäuse 18 angeschraubt, um über dieses das Hydraulikmedium 11 dem CSC 6 zuzuführen. Der Einschraubadapter 21 umfasst ein Zwischenstück 22, das an der Rohrleitung bzw. K0-Leitung 8 befestigt ist sowie einen Schraubstutzen 23 zur Verbindung mit dem Kurbelwellengehäuse.

### Bezugszeichenliste

- 1: Verbrennungsmotor
- 2: Elektromaschine
- 3: Getriebe
- 4: Trennkupplung (K0-Kupplung
- 5: Torsionsschwingungsdämpfer
- 6: Zentralausrücker (CSC)
- 7: hydraulische Betätigungsvorrichtung
- 8: Leitung (K0-Leitung)
- 9: Zylinder
- 10: Kolben
- 11: Hydraulikmedium
- 12: Hydraulik-Primärseite
- 13: Hydraulik-Sekundärseite
- 14: Mechatronikeinheit
- 15: Ventilblock
- 16: Steuerventil
- 17: Kupplungsgehäuse
- 18: Kurbelwellengehäuse
- 19: Tankleitung
- 20: Druckleitung
- 21: Einschraubadapter
- 22: Zwischenstück
- 23: Schraubstutzen

## Patentansprüche

1. Antriebsanordnung umfassend einen Verbrennungsmotor (1), ein Getriebe (3) mit einer ersten Kupplung (K1-Kupplung) sowie dazwischen angeordnet eine Elektromaschine (2) und eine weitere Kupplung (K0-Kupplung) (4), wobei die weitere Kupplung (4) wahlweise ein An- oder Abkuppeln der Elektromaschine (2) erlaubt und das Einrücken und das Ausrücken der weiteren Kupplung (4) mittels einer hydraulischen Betätigungsvorrichtung (7) erfolgt, wobei das Getriebe (3) zur Betätigung der Getriebevorgänge ein Hydrauliksystem aufweist, und das ein Stellmittel, welches auf die hydraulische Betätigungsvorrichtung (7) für die weitere Kupplung (4) wirkt, ein Hydraulikmedium (11) ist, das aus dem Getriebe-Hydrauliksystem stammt, **dadurch gekennzeichnet, dass** die hydraulische Betätigungsvorrichtung (7) eine Hydraulik-Primär- (12) und Sekundärseite (13) aufweist.

2. Antriebsanordnung nach Anspruch 1 **gekennzeichnet durch** einen Ventilblock (15), der die hydraulische Betätigungsvorrichtung (7) für die weitere Kupplung (4) sowie ein Ventil (16) zur Steuerung des aus dem Getriebe-Hydrauliksystems stammenden Hydraulikmediums aufnimmt.

3. Antriebsanordnung nach Anspruch 1 oder 2, **dadurch gekennzeichnet, dass** der Ventilblock (15) an der Außenseite des Getriebegehäuses auf Höhe des innerhalb des Getriebegehäuses angeordneten Hydrauliksystems, das Teil der Mechatronikeinheit (14) des Getriebes (3) ist, angeordnet ist.

4. Antriebsanordnung nach einem der Ansprüche 1 bis 3, **dadurch gekennzeichnet, dass** ein Rückflusssystem vorgesehen ist, um das Hydraulikmedium (11) als. Stellmittel für die hydraulische Betätigungsvorrichtung (7) in den Hydrauliksumpf und von dort nach einer Reinigung wieder in den Hydraulikkreislauf des Getriebe-Hydrauliksystems zurückzuführen.

## Claims

1. Drive arrangement comprising an internal combustion engine (1), a transmission (3) with a first clutch (K1 clutch), and, arranged between them, an electric machine (2) and a further clutch (K0 clutch) (4), the further clutch (4) optionally permitting coupling or decoupling of the electric machine (2), and the engagement and the disengagement of the further clutch (4) taking place by means of a hydraulic actuating apparatus (7), the transmission (3) having a hydraulic system in order to actuate the transmission operations, and one actuating means which acts on the hydraulic actuating apparatus (7) for the further clutch (4) being a hydraulic medium (11) which comes from the transmission hydraulic system, **characterized in that** the hydraulic actuating apparatus (7) has a primary hydraulic side (12) and a secondary hydraulic side (13).

2. Drive arrangement according to Claim 1, **characterized by** a valve block (15) which receives the hydraulic actuating apparatus (7) for the further clutch (4) and a valve (16) for controlling the hydraulic medium which comes from the transmission hydraulic system.

3. Drive arrangement according to Claim 1 or 2, **characterized in that** the valve block (15) is arranged on the outer side of the transmission housing at the level of the hydraulic system which is arranged within the transmission housing and is part of the mechatronic unit (14) of the transmission (3).

4. Drive arrangement according to one of Claims 1 to 3, **characterized in that** a return-flow system is provided, in order to guide the hydraulic medium (11), as actuating means for the hydraulic actuating apparatus (7), back into the hydraulic sump and from there, after cleaning, into the hydraulic circuit of the transmission hydraulic system again.

## Revendications

1. Agencement d'entraînement comprenant un moteur à combustion interne (1), une transmission (3) avec un premier embrayage (embrayage K1) ainsi qu'une machine électrique (2) disposée entre eux, et un embrayage supplémentaire (embrayage K0) (4), l'embrayage supplémentaire (4) permettant de manière sélective un accouplement ou un désaccouplement de la machine électrique (2) et l'embrayage et le débrayage de l'embrayage supplémentaire (4) s'effectuant au moyen d'un dispositif d'actionnement hydraulique (7), la transmission (3) présentant un système hydraulique pour l'actionnement des opérations de changement de vitesses, et l'un des moyens de réglage, qui agit sur le dispositif d'actionnement hydraulique (7) pour l'embrayage supplémentaire (4), étant un fluide hydraulique (11) qui provient du système hydraulique de la transmission, **caractérisé en ce que** le dispositif d'actionnement hydraulique (7) présente un côté hydraulique primaire (12) et secondaire (13).

2. Agencement d'entraînement selon la revendication 1, **caractérisé par** un bloc soupape (15) qui reçoit le dispositif d'actionnement hydraulique (7) pour l'embrayage supplémentaire (4) ainsi qu'une soupape (16) pour commander le fluide hydraulique provenant du système hydraulique de la transmission.

3. Agencement d'entraînement selon la revendication 1 ou 2, **caractérisé en ce que** le bloc soupape (15) est disposé sur le côté extérieur du boîtier de transmission à la hauteur du système hydraulique disposé à l'intérieur du boîtier de transmission, lequel système hydraulique fait partie de l'unité mécatronique (14) de la transmission (3).

4. Agencement d'entraînement selon l'une quelconque des revendications 1 à 3, **caractérisé en ce qu'**il est prévu un système de reflux afin de faire recirculer le fluide hydraulique (11) sous forme de moyen de réglage pour le dispositif d'actionnement hydraulique (7) dans le carter hydraulique et de là, après un nettoyage, à nouveau dans le circuit hydraulique du système hydraulique de la transmission.
